# EUROPÄISCHE PATENTSCHRIFT

(11) **EP 1 420 869 B1**
(45) Veröffentlichungstag und Bekanntmachung des Hinweises auf die Patenterteilung: **20.12.2006**
(21) Anmeldenummer: 02769896.8
(22) Anmeldetag: 28.08.2002
(51) Int. Cl.: B01D 24/00

(54) **FILTERVORRICHTUNG FÜR GARTENTEICHE ODER DERGLEICHEN**
FILTER DEVICE FOR GARDEN PONDS OR SIMILAR
DISPOSITIF DE FILTRAGE POUR PLAN D'EAU DE JARDIN OU ANALOGUE

(30) Priorität: 30.08.2001 DE 10142092
(43) Veröffentlichungstag der Anmeldung: 26.05.2004
(73) Patentinhaber: Oase GmbH, 48477 Hörstel (DE)
(72) Erfinder: HOFFMEIER, Dieter, 49479 Ibbenbüren (DE)
(74) Vertreter: Meissner, Peter E.
(86) Internationale Anmeldenummer: PCT/DE2002/003163
(87) Internationale Veröffentlichungsnummer: WO 2003/024560

(56) Entgegenhaltungen:
- EP-A- 0 259 000
- DE-A- 10 101 313
- GB-A- 1 282 217
- US-A- 1 758 412
- US-A- 4 350 590
- PATENT ABSTRACTS OF JAPAN vol. 009, no. 166 (C-290), 11. Juli 1985 (1985-07-11) -& JP 60 038010 A (MIDORI WATANABE), 27. Februar 1985 (1985-02-27)

## Beschreibung

Die vorliegende Erfindung betrifft ein Verfahren zum Reinigen einer Filtervorrichtung für Teiche, wobei die Filtervorrichtung einen Behälter (3) und ein in dem Behälter (3) angeordnetes, komprimierbares Filtermedium (19) aufweist, das zwischen einer ersten Haltefläche (13) und einer zweiten Haltefläche (15) angeordnet ist, wobei der Abstand zwischen der ersten Haltefläche (13) und der zweiten Haltefläche (15) über ein Betätigungselement (17) variierbar ist und das Filtermedium (19) an einem zentralen Strömungskanal (11) angeordnet ist, der das Filtermedium (19) abstützt und Perforationen aufweist.

Ein Verfahren zum Reinigen einer Filtervorrichtung ist aus der US-A 4,350,590 bekannt. Mit dieser Filtervorrichtung des Standes der Technik soll ausschließlich sehr feines Material von 1 µm oder kleiner gefiltert werden. Die Filterwirkung kann durch Komprimieren des Filtermediums erhöht werden, d.h., durch eine höhere Komprimierung kann ein feineres Material gefiltert werden. Zu Reinigungszwecken kann das Filtermedium dekomprimiert und dann rückgespült werden. Der Vorgang einer Komprimierung und einer mit einer Rückspülung verbundenen Dekomprimierung kann wiederholt werden, um den Reinigungserfolg zu optimieren. Durch die Dekomprimierung vergrößert sich der Porenraum im Filtermedium, so dass bei einer Rückspülung im Filtermedium zurückgehaltene Teilchen leicht ausgespült werden können.

Auch aus EP 0 259 000 A1 ist ein Verfahren zum Reinigen einer Filtervorrichtung bekannt, die in der Getränkeindustrie eingesetzt werden soll. Das Filtermedium besteht aus speziellen Fasern, in denen Teilchen, insbesondere Hefeteilchen, festgehalten werden sollen. Die Einstellung der Filterwirkung erfolgt ebenfalls über den Komprimierungsgrad des Filtermediums. Auch diese Filtervorrichtung kann nach einer Dekomprimierung durch Rückspülung gereinigt werden, wobei auch dieser Vorgang mehrmals wiederholt werden kann.

Für Filtervorrichtungen, die in Teichen eingesetzt werden, um Schwebstoffe aus dem Teichwasser zu filtern, sind solche Filtervorrichtungen des Standes der Technik ungeeignet. Das Filtermedium setzt sich aber im Laufe der Zeit mit Verunreinigungen zu, so dass auch eine Reinigung des Filtermediums von Teichfiltern erforderlich wird. Zu diesem Zweck müssen Filtervorrichtungen für Teiche regelmäßig auseinandergebaut und die Filtermedien im ausgebauten Zustand gereinigt werden.

Dieses Verfahren ist zeitaufwendig, umständlich und kann auch zu Beschädigungen der Filtervorrichtung und des Filtermediums führen.

Die Aufgabe der vorliegenden Erfindung ist daher, ein Verfahren zum Reinigen einer Filtervorrichtung für Teiche zu schaffen, die einfach zu reinigen ist, ohne dass diese zum Zwecke der Reinigung auseinander gebaut werden muss.

Die Aufgabe wird gemäß Anspruch 1 gelöst, mit den Verfahrenschritten: Komprimieren des Filtermediums (19), um eine Verunreinigung in dem Filtermedium mit der im Filtermedium vorhandenen Flüssigkeit aus zu drücken, Dekomprimieren des Filtermediums (19) und Spülen des Filtermedium (19) mit dem im Behälter befindlichen Teichwasser.

Mit der vorliegenden Erfindung ist es nunmehr möglich, das Filtermedium in seiner Arbeitsstellung bedarfsweise durch Veränderung des Abstandes zwischen den Halteflächen zu komprimieren und zu dekomprimieren, wobei durch die Komprimierung Verunreinigungen in dem Filtermedium mit der im Filtermedium vorhandenen Flüssigkeit ausgedrückt werden und in den zentralen Strömungskanal bez. den konzentrischen Strömungskanal gelangen.

Die Verringerung des Abstands zwischen den beiden Halteflächen kann wahlweise durch Druck der oberen Haltefläche in Richtung der unteren Haltefläche oder aber durch Zug der unteren Haltefläche in Richtung der oberen Haltefläche erfolgen.

Weitere vorteilhafte Merkmale der vorliegenden Erfindung ergeben sich aus den Unteransprüchen.

Eine Ausführungsform der vorliegenden Erfindung wird im Folgenden anhand der Zeichnungen näher beschrieben. Es zeigen:
- Fig. 1: eine schematische Darstellung in Seitenansicht, teilweise aufgeschnitten, einer erfindungsgemäßen Filtervorrichtung unter Anzeige der Strömungswege;
- Fig. 2: eine schematische Darstellung der Filtervorrichtung in Fig. 1, wobei ein Betätigungselement zur Reduzierung des Abstandes von zwei Halteflächen betätigt wird.
- Fig. 3a, 3b und 3c: jeweils schematische Draufsichten eines Multifunktionsreglers gemäß vorliegender Erfindung in drei unterschiedlichen Stellungen.

Eine Filtervorrichtung 1 umfasst einen Behälter 3 und einen Behälterdeckel 5. In dem Behälterdeckel 5 ist ein Einlassbereich 7 und ein Auslassbereich 9 ausgebildet. Der Auslassbereich 9 umfasst eine erste Ablauföffnung 9.1 zu einem Teich und eine zweite Ablauföffnung 9.2 zu einem Kanal. Der Einlassbereich 7 umfasst eine Einlassöffnung 7.1, die über einen Schlauch, eine Leitung oder dergleichen, an eine Pumpe angeschlossen ist und über die zu filterndes Teichwasser in die Filtervorrichtung 1 gepumpt werden kann. In dem Behälter 3 ist ein zentraler Strömungskanal 11 als Filterstützrohr ausgebildet, das heißt, der Umfang des Filterstützrohrs ist geschlitzt, perforiert oder dergleichen.

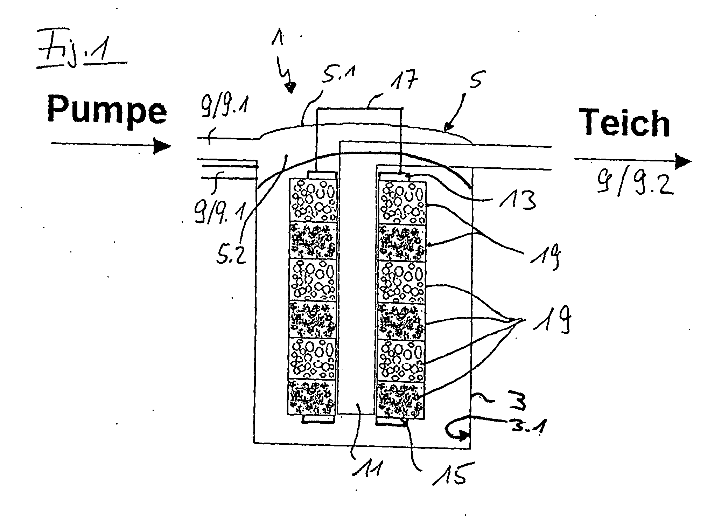

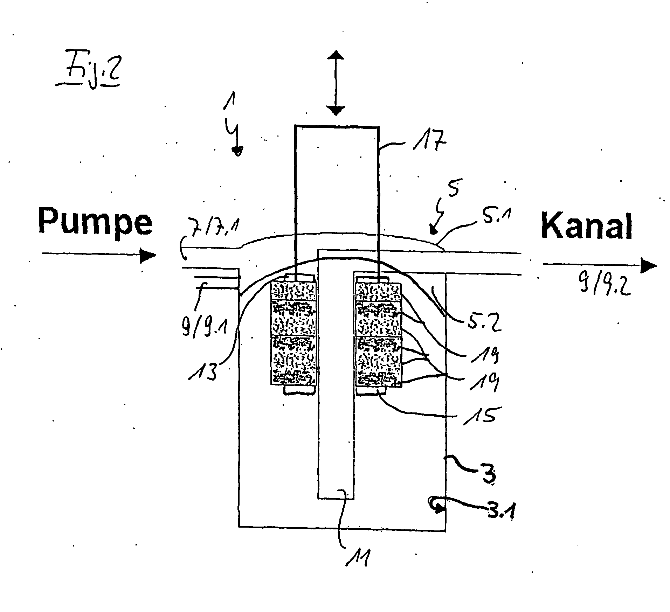

In der Nähe des Behälterdeckels 5, also in Fig. 1 oben, ist an dem zentralen Strömungskanal 11 stromaufwärts eine obere, erste Haltefläche 13 ortsfest angeordnet. Bodenseitig, das heißt, an einem stromabwärts gelegenen Ende des zentralen Strömungskanals 11 ist eine untere, zweite Haltefläche 15 angeordnet, derart, dass diese am Umfang des zentralen Strömungskanals 11 entlang gleiten kann. Ein Betätigungselement 17 ist mit der unteren Haltefläche 15 fest verbunden und an der oberen Haltefläche 13 geführt und durch den Behälterdeckel 5 hindurch nach außen geführt. Durch Betätigung des Betätigungselements 17 (siehe Fig. 2) kann die untere, zweite Haltefläche 15 entlang des zentralen Strömungskanals 11 in Richtung der ersten Haltefläche 13 gezogen werden, so dass sich der Abstand zwischen beiden Halteflächen 13, 15 verringert. Dadurch wird ein Filtermedium 19, das konzentrisch zu dem zentralen Strömungskanal 11 und zwischen den Halteflächen 13 und 15 angeordnet ist, komprimiert. Das Filtermedium 19 ist z. B. ein offenzelliges Material, das für Filterfunktionen geeignet und komprimierbar ist, z. B. ein natürliches oder synthetisches Schaummaterial.

In einer anderen Ausführungsform kann auch die obere, erste Haltefläche 13 längs verschiebbar an dem Umfang des zentralen Strömungskanals 11 angeordnet sein und die untere, zweite Haltefläche 15 fest am Umfang des zentralen Strömungskanals 11 angeordnet sein. In diesem Falle ist das Betätigungselement 17 dann auch fest mit der oberen, ersten Haltefläche 13 verbunden, so dass durch Betätigung des Betätigungselements 17 die erste, obere Haltefläche 13 in Richtung der unteren, zweiten Haltefläche 15 gedrückt werden kann.

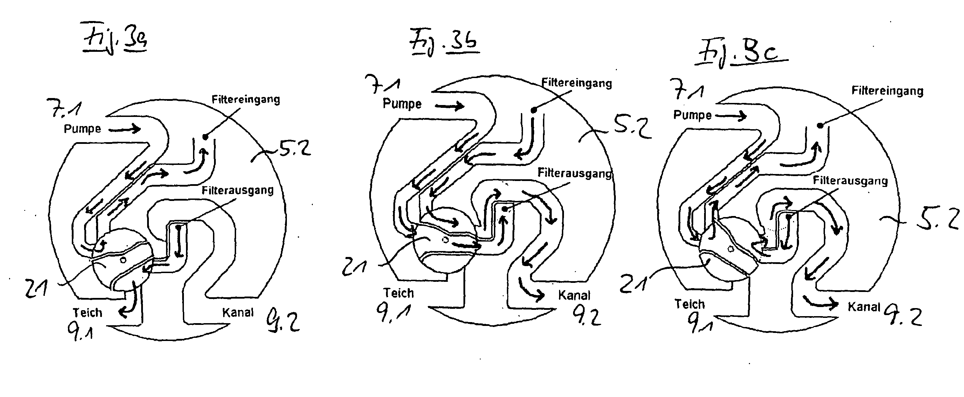

In weiteren Ausführungsformen ist es denkbar, dass im Fall einer Zugbetätigung die erste Haltefläche 13 durch den Behälterdeckel 5 gebildet wird und im Falle einer Druckbetätigung die zweite Haltefläche 15 durch den Behälterboden gebildet wird. Der Behälterdeckel 5 weist einen Oberdeckel 5.1 und einen Unterdeckel 5.2 auf. Im Unterdeckel 5.2 ist ein Mehrwegeregler 21 angeordnet (Fig. 3). Der Mehrwegeregler 21 dient dazu, dass wahlweise drei Strömungswege eingestellt werden können. Zu diesem Zweck sind in dem Unterdeckel 5.2 auch Strömungskanäle (nicht dargestellt) ausgebildet. Der Mehrwegeregler 21 und die Strömungskanäle können in anderen Ausführungsformen auch im Oberdeckel 5.1 ausgebildet sein.

In einer ersten Stellung des Mehrwegereglers 21 (Fig. 3a) ist ein Hauptströmungsweg eingestellt, der eine zu filternde Flüssigkeit nach der Filterung wieder durch die erste Ablauföffnung 9.1 an ihren Ausgangsort zurück führt, z.B. Teichwasser wieder zurück in einen Teich. In Fig. 3b ist ein zweiter Strömungsweg eingestellt, in welchem ein strömendes Medium über die zweite Ablauföffnung 9.2 in einen Kanal geleitet wird. Diese Stellung dient zur Rückspülung der Filtervorrichtung 1. In Fig. 3c ist ein dritter Strömungsweg eingestellt, in welchem ebenfalls ein strömendes Medium durch die zweite Ablauföffnung 9.2 in einen Kanal geleitet wird. Dieser Strömungsweg dient zur Klarspülung der Filtervorrichtung 1.

Der Einbau des Mehrwegereglers 21 im Behälterdeckel 5 erlaubt, dass in dem Mehrwegeregler 21, der ein Hahnküken umfasst, gewisse Leckagen auftreten dürfen. Diese Leckagen verbleiben im Behälter 3 und gelangen auf einem der zahlreichen Wege zur ersten 9.1 oder zweiten Ablauföffnung 9.1.

Der Behälter 3 weist eine Innenwand 3.1 auf, von welcher das Filtermedium 17 einen Abstand aufweist. Dadurch ist zwischen dem Filtermedium 19 und der Innenwand 3.1 ein Strömungskanal 23 ausgebildet. Dieser erstreckt sich über die gesamte Bauhöhe des Filtermediums 19 und verläuft konzentrisch zu dem zentralen Strömungskanal 11.

In einer alternativen Ausführungsform kann die Reinigung hauptsächlich durch Betätigung des Mehrwegereglers 21 erfolgen und durch die Halteflächen 13, 15 und das Betätigurigselement 17 unterstützt werden.

## Patentansprüche

1. Verfahren zum Reinigen einer Filtervorrichtung für Teiche, wobei die Filtervorrichtung einen Behälter (3) und ein in dem Behälter (3) angeordnetes, komprimierbares Filtermedium (19) aufweist, das zwischen einer ersten Haltefläche (13) und einer zweiten Haltefläche (15) angeordnet ist, wobei der Abstand zwischen der ersten Haltefläche (13) und der zweiten Haltefläche (15) über ein Betätigungselement (17) variierbar ist und das Filtermedium (19) an einem zentralen Strömungskanal (11) angeordnet ist, der das Filtermedium (19) abstützt und Perforationen aufweist, mit folgenden Schritten:
- Komprimieren des Filtermediums (19) um Verunreinigungen in dem Filtermedium mit der im Filtermedium vorhandenen Flüssigkeit auszudrücken;
- Dekomprimieren des Filtermediums (19);
- Spülen des Filtermedium (19) mit dem im Behälter befindlichen Teichwasser.

2. Filtervorrichtung nach Anspruch 1,
**dadurch gekennzeichnet,**
**dass** die zweite Haltefläche (15) durch Betätigung des Betätigungselements (17) entlang des zentralen Strömungskanals (11) in Richtung der ersten Haltefläche (13) gezogen wird, um den Abstand zwischen der ersten (13) und der zweiten Haltefläche (15) zu verringern.

3. Filtervorrichtung nach Anspruch 1,
**dadurch gekennzeichnet,**
**dass** durch die Betätigung des Betätigungselements (17) die erste Haltefläche (13) in Richtung der zweiten Haltefläche (15) gedrückt wird.

## Claims

1. Method for cleaning a filter device for ponds, the filter device having a receptacle (3) and a compressible filter medium (19) positioned inside the receptacle (3), which medium is positioned between a first supporting surface (13) and a second supporting surface (15), wherein the distance between the first supporting surface (13) and the second supporting surface (15) can be altered by means of an actuating element (17), and wherein the filter medium (19) is positioned against a central flow channel (11) which supports the filter medium (19) and which has perforations, having the following stages:
- compressing the filter medium (19) in order to squeeze out impurities in the filter medium with the liquid that is present in the filter medium;
- decompressing the filter medium (19);
- rinsing the filter medium (19) with the pond water that is present in the receptacle.

2. Filter device as in claim 1,
**characterised in that**
the second supporting surface (15) is pulled along the central flow channel (11) towards the first supporting surface (13) by the operation of the operating element (17), in order to reduce the distance between the first (13) and second (15) supporting surfaces.

3. Filter device as in claim 1,
**characterised in that**,
as a result of the operation of the operating element (17), the first supporting surface (13) is pressed towards the second supporting surface (15).

## Revendications

1. Procédé pour nettoyer un dispositif de filtration pour plans d'eau, le dispositif de filtration comportant un récipient (3) et un milieu filtrant (19) comprimable agencé dans le récipient (3), lequel milieu filtrant est agencé entre une première surface de maintien (13) et une deuxième surface de maintien (15), l'écart entre la première surface de maintien (13) et la deuxième surface de maintien (15) pouvant être modifié par l'intermédiaire d'un élément d'actionnement (17) et le milieu filtrant (19) étant agencé le long d'un canal d'écoulement central (11) qui supporte le milieu filtrant (19) et présente des perforations, comprenant les étapes suivantes :
- compression du milieu filtrant (19) pour exprimer des impuretés dans le milieu filtrant avec le liquide présent dans le milieu filtrant ;
- décompression du milieu filtrant (19) ;
- lavage du milieu filtrant (19) avec l'eau du plan d'eau se trouvant dans le récipient.

2. Dispositif de filtration selon la revendication 1,
**caractérisé en ce que** la deuxième surface de maintien (15) est tirée par actionnement de l'élément d'actionnement (17) le long du canal d'écoulement central (11) en direction de la première surface de maintien (13) pour réduire l'écart entre la première surface de maintien (13) et la deuxième surface de maintien (15).

3. Dispositif de filtration selon la revendication 1,
**caractérisé en ce que**, par l'actionnement de l'élément d'actionnement (17), la première surface de maintien (13) est poussée en direction de la deuxième surface de maintien (15).
